# EUROPEAN PATENT APPLICATION

(11) **EP 3 825 952 A1**
(43) Date of publication of application: **26.05.2021**
(21) Application number: 20205480.5
(22) Date of filing: 03.11.2020
(51) Int. Cl.: G06Q 50/18

(54) **SYSTEM FOR COLLECTING PROCESSING TARGET OBJECT, MANAGEMENT APPARATUS FOR MANAGING COLLECTION WORK OF PROCESSING TARGET OBJECT, AND METHOD FOR MANAGING COLLECTION WORK OF PROCESSING TARGET OBJECT**

(30) Priority: 20.11.2019 JP 2019209571; 13.10.2020 JP 2020172705
(71) Applicant: Ricoh Company, Ltd., Tokyo 143-8555 (JP)
(72) Inventor: KATAHIRA, Ohki, Tokyo, 143-8555 (JP); HAITANI, Kimiyoshi, Tokyo, 143-8555 (JP)
(74) Representative: SSM Sandmair

(57) **Abstract**

A system (1) for collecting processing target object includes a plurality of collection apparatuses (3), provided respectively at a plurality of locations, each configured to accumulate the processing target object in each of the plurality of collection apparatuses (3); a capacity level detection unit (37), provided for each of the plurality of collection apparatuses (3), configured to detect physical quantity of the processing target object accumulated in each of the plurality of collection apparatuses (3); and a collection determination unit (52) configured to determine a collection plan of the processing target object accumulated in each of the plurality of collection apparatuses (3) based on information on the physical quantity of the processing target object accumulated in each of the plurality of collection apparatuses (3) detected by the capacity level detection unit (37).

## Description

### BACKGROUND

### Technical Field

This disclosure relates to a system for collecting processing target object, a management apparatus for managing a collection work of processing target object, and a method for managing a collection work of processing target object.

### Background Art

JP-2012-131597-A discloses a document recovery system that recovers accumulated confidential document using a recovery box having a weight sensor. More specifically, this technology uses the weight sensor provided for the recovery box to determine whether an amount of the accumulated confidential document has reached a given warning threshold.

Further, JP-2007-042076-A discloses a management system for processing confidential document that can collect a confidential document recovery box by simply requesting a recovery of confidential document recovery box when a capacity level of the confidential document collection box rented to a client becomes full and the client wants the confidential document recovery box to be replaced. Further, as to the management system for processing confidential document disclosed in JP-2007-042076-A, the recovery schedule information and the route information actually used by a recovery driver can be checked, with which collectors or the like can check whether the recovery has been properly carried out.

Further, as to the technology disclosed in JP-2012-131597-A, the recovery box is recovered only if the amount of the accumulated confidential document exceeds a pre-set warning threshold. Therefore, as to the technology disclosed in JP-2012-131597-A, even if a recovery box accumulating confidential document with an amount close to the warning threshold is present near a recovery location of another recovery box that is to be recovered, the recovery processing of these recovery boxes cannot be performed collectively, and thereby the collection of the recovered boxes becomes inefficient.

Further, as to the technology disclosed in JP-2007-042076-A, clients determine whether or not the capacity level of the confidential document recovery box becomes full, and the clients transmit a recovery request of the confidential document recovery box to an management apparatus using the email or the like. Therefore, a complicated procedure is required for the clients, and the recovery of the confidential document recovery box may be delayed.

### SUMMARY

As one aspect of the present disclosure, a system for collecting processing target object is devised. The system includes a plurality of collection apparatuses, provided respectively at a plurality of locations, each configured to accumulate the processing target object in each of the plurality of collection apparatuses; a capacity level detection unit, provided for each of the plurality of collection apparatuses, configured to detect physical quantity of the processing target object accumulated in each of the plurality of collection apparatuses; and a collection determination unit configured to determine a collection plan of the processing target object accumulated in each of the plurality of collection apparatuses based on information on the physical quantity of the processing target object accumulated in each of the plurality of collection apparatuses detected by the capacity level detection unit.

As another aspect of the present disclosure, a management apparatus for managing a collection work of processing target object is devised. The management apparatus includes a capacity level receiving unit configured to receive information on physical quantity of the processing target object accumulated in each of a plurality of collection apparatuses provided respectively at a plurality of locations; and a collection determination unit configured to determine a collection plan of the processing target object accumulated in each of the plurality of collection apparatuses based on the information on the physical quantity of the processing target object accumulated in each of the plurality of collection apparatuses detected by the capacity level detection unit.

As another aspect of the present disclosure, a method for managing a collection work of processing information is devised. The method includes detecting physical quantity of the processing target object accumulated in each of a plurality of collection apparatuses provided respectively at a plurality of locations; and determining a collection plan of the processing target object accumulated in each of the plurality of collection apparatuses based on information on the detected physical quantity of the processing target object accumulated in each of the plurality of collection apparatuses.

As to the above described aspects of the present disclosure, processing target object can be collected efficiently using simple processing.

### BRIEF DESCRIPTION OF THE DRAWINGS

A more complete appreciation of the description and many of the attendant advantages and features thereof can be readily acquired and understood from the following detailed description with reference to the accompanying drawings, wherein:
FIG. 1 illustrates a configuration of a document collection system according to a first embodiment of this disclosure;
FIGs. 2A, 2B, 2C, and 2D illustrate an example of configuration of a collection box;
FIG. 3 is an example of configuration of hardware block diagram of a server;
FIG. 4 is an example of configuration of hardware block diagram of a smartphone;
FIG. 5 is an example of configuration of functional block diagram used for document collection processing performed by CPU of a server;
FIGs. 6A and 6B illustrate examples of data table storing various data related to collection work of confidential document;
FIG. 7 is a flowchart illustrating a processing of monitoring capacity level using a server;
FIG. 8 is a flowchart illustrating a flow of processing of selecting collection route using a server;
FIG. 9 is a flowchart illustrating a flow of processing of managing status using a server;
FIG. 10 is an example of collection data table after performing a collection work; and
FIGs. 11A, 11B, and 11C are examples of discard data table after performing a collection work or after performing a discarding work; and
FIGs. 12A and 12B illustrate an example of configuration of a collection box according to a second embodiment of this disclosure.

The accompanying drawings are intended to depict embodiments of the this disclosure and should not be interpreted to limit the scope thereof. The accompanying drawings are not to be considered as drawn to scale unless explicitly noted.

### DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

Further, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Hereinafter, a description is given of an embodiment of a collection system of processing target object, a management apparatus of managing a collection work of processing target object, and a method of managing a collection work of processing target object with reference to the accompanying drawings.

### (First Embodiment)

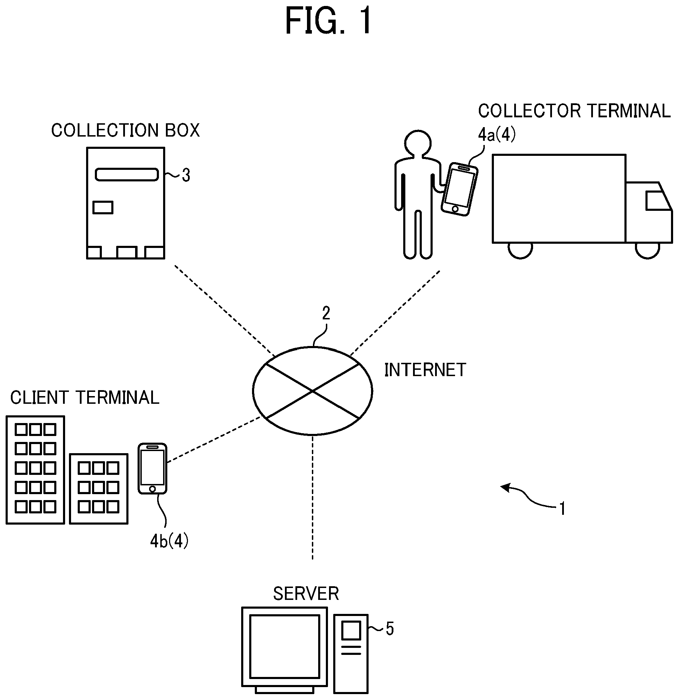

FIG. 1 illustrates a configuration of a document collection system 1 according to a first embodiment. The document collection system 1 is described as an example of collection system of processing target object. In this description, the processing target object is, for example, confidential document, such as sheet document, paper document or the like. Further, the processing target object is not limited to the confidential document, such as paper document, but can be any processing target object.

As illustrated in FIG. 1, the document collection system 1 (i.e., collection system of processing target object) includes, for example, a collection box 3, an information terminal 4a used by a collector, an information terminal 4b used by a client, and a server 5, connectable one to another via the Internet 2. The collection box 3, which is a collection apparatus, is used to collect confidential document (e.g., paper document), which is the processing target object. The information terminal 4a used by the collector (hereinafter, collector terminal 4a) is used by a collector handling a collection work of the processing target object. The information terminal 4b used by the client (hereinafter, client terminal 4b) is used by the client who requests a collection work of the confidential document to the collector.

The server 5 functions as a management apparatus of managing a collection work of processing target object. The server 5 is implemented by computer. Further, the server 5 may be configured as one physical server or a plurality of physical servers.

The collector terminal 4a and the client terminal 4b may be a smartphone or a tablet terminal. Further, the collector terminal 4a and the client terminal 4b may be a personal computer or the like.

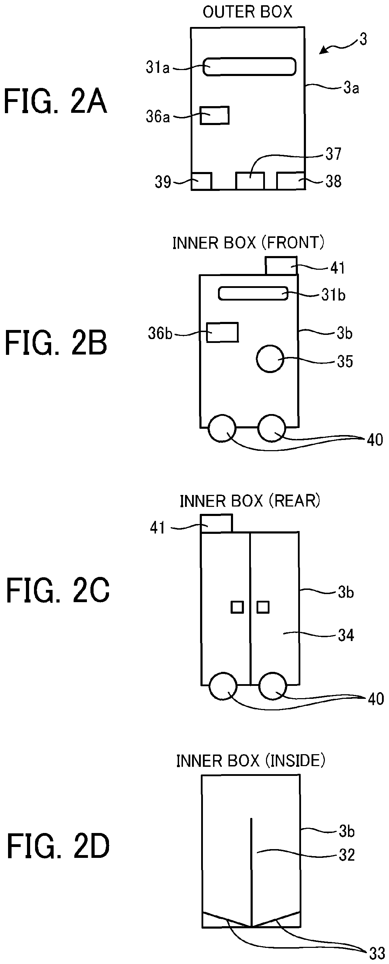

Hereinafter, with reference to FIG. 2, a description is given of the collection box 3. FIGs. 2A, 2B, 2C, and 2D illustrate an example of configuration of the collection box 3 used as a collection case or housing, which may be configured, for example, using a box shape. The collection box 3 includes, for example, an outer case, such as an outer box 3a, and an inner case, such as an inner box 3b. FIG. 2A illustrates an appearance of the collection box 3, which is an appearance of the outer box 3a. FIG. 2B illustrates an appearance of a front side of the inner box 3b. FIG. 2C illustrates an appearance of ra ear side of the inner box 3b. FIG. 2D illustrates an inside of the inner box 3b. The collection box 3 is an example of collection apparatus.

As illustrated in FIGs. 2A and 2B, the collection box 3 employs a double structure of the outer box 3a of box shape and the inner box 3b of box shape included inside the outer box 3a, which is known as box-in-box. Further, the shape of the collection box 3, the outer box 3a, and the inner box 3b are not limited to the box shape.

Further, the collection box 3 is not limited to the double structure of box-in-box, but the collection box 3 can be configured using the inner box 3b alone. Further, the collection box 3 may include a pedestal supporting the inner box 3b of the box shape instead of the outer box 3a of the box shape.

The collection box 3 is a post-type box having an inlet port 31a for the outer box 3a, and an inlet port 31b for the inner box 3b, respectively. The inlet port 31a of the outer box 3a is provided on one side face of the outer box 3a. Therefore, the upper face of the outer box 3 a can be configured as a flat face on which packages or the like can be placed. Further, the inlet port 31a of the outer box 3a may be provided on the upper face of the outer box 3a. Further, the upper face of the outer box 3a may not be configured as the flat face.

The inlet port 31b of the inner box 3b is provided at a position facing the inlet port 31a of the outer box 3a. With this configuration, the inside of the inner box 3b is communicated to the outside of the outer box 3a. The inner box 3b accommodates confidential document (e.g., paper document), which is the processing target object, that is inserted through the inlet port 31b. Further, the inlet port 31a of the outer box 3a and the inlet port 31b of the inner box 3b are formed with a given size so that the confidential document cannot be picked up by inserting a hand through the inlet port 31a and the inlet port 31b.

The inner box 3b is collected by a collector when the inner box 3b is filled with the stored or accommodated confidential document or when the inner box 3b is almost filled with the stored confidential document, and then the collector replaces the filled inner box 3b with an empty inner box 3b. Hereinafter, a time when the inner box 3b is filled with the stored or accommodated confidential document or almost filled with the stored or accommodated confidential document is simply referred to as the capacity-saturated-time of the collection box 3.

The outer box 3a and the inner box 3b are made of material having higher hardness. The high-hardness material that forms the outer box 3a and the inner box 3b may be, for example, metal plates and molded parts by resin. Further, the inner box 3b is made as opaque so that the inside of the inner box 3b cannot be seen from the outside.

As illustrated in FIG. 2D, the inside of the inner box 3b is partitioned by a partition plate 32 so that sheet, such as A4 paper, can be placed with two rows. Further, the partition plate 32 may not be provided. Further, as illustrated in FIG. 2D, the inner bottom face of the inner box 3b has an inclined portion 33 inclined toward the partition plate 32 so that the confidential document sheets overlap one to another using the gravity. Further, the inner bottom face of the inner box 3b may be a horizontal face.

Further, the outer box 3a is provided with an open-close door for removing and replacing the inner box 3b.

Further, as illustrated in FIG. 2C, the inner box 3b also includes an open-close door 34 at the rear side for removing the stored or accommodated confidential document. The open-close door 34 of the inner box 3b can be opened for opening an entire rear face of the inner box 3b. At a discarding plant or a discarding site, the open-close door 34 of the inner box 3b is opened to remove the confidential document with one action. As illustrated in FIG. 2B, the inner box 3b includes a key lock 35 that controls opening and closing of the open-close door 34 to prevent a theft of confidential document stored or accommodated in the inner box 3b.

Further, as illustrated in FIGs. 2A and 2B, the outer box 3a and the inner box 3b are respectively provided with identification information (ID) 36a and identification information (ID) 36b. The identification information (ID) 36a and 36b can be respectively provided to the outer box 3a and the inner box 3b, for example, by printing code symbols on the outer box 3a and the inner box 3b, or attaching radio frequency identification (RFID) on the outer box 3a and the inner box 3b. In FIGs. 2A and 2B, the code symbol is respectively printed on the outer box 3a and the inner box 3b to provide the identification information (ID) 36a and the identification information (ID) 36b. The identification information (ID) may be also referred to as the identifier.

Further, as illustrated in FIG. 2A, the outer box 3a is provided with a sensor 37, which is a capacity level detection unit, for detecting a capacity level of confidential document accumulated in the inner box 3b (e.g., weight of the inner box 3b). The sensor 37 used for detecting the capacity level of confidential document in the inner box 3b may be, for example, a weight sensor, and a height sensor. In the embodiment, the weight sensor is adopted. As to the height sensor, a line sensor or a plurality of sensors arranged in a row with a pre-set interval may be adopted. Further, in the embodiment, the height and/or weight of confidential document is used for detecting the capacity level of confidential document, but is not limited thereto. In this description, the capacity level of confidential document in the inner box 3b means an amount or quantity of confidential document accumulated in the inner box 3b.

Further, as illustrated in FIG. 2A, the outer box 3a includes a communication device 38, which communicates with the server 5 via the Internet 2 to communicate data or information, such as capacity level (example of physical quantity) of confidential document, which is the processing target object stored or accommodated in the collection box 3, obtained or acquired from the sensor 37 to the server 5. The communication device 38 may use wireless communication or wired communication. In the embodiment, wireless communication is adopted. The communication device 38 is, for example, subscriber identification module (SIM) dedicated to data communication.

The communication device 38 communicates data, such as capacity level of confidential document, which is the processing target object stored or accommodated in the collection box 3, obtained or acquired from the sensor 37 to the server 5 with a given time interval. In this description, the communication device 38 communicates data obtained from the sensor 37 to the server 5 with the given time interval, but is not limited thereto. For example, the communication device 38 may communicate at a fixed time point during the daytime, and may not communicate at night, such as midnight, when the measuring by the sensor 37 is not required. Further, the communication device 38 may be set with a communication time interval, such as 2 hours, 3 hours, 2 hours, and 3 hours, without setting the given same time interval.

Further, as illustrated in FIG. 2A, the outer box 3a includes a power supply 39 for supplying power to the sensor 37 and the communication device 38. The power supply 39 may include an outlet power source, a battery or a solar cell.

As illustrated in FIGs. 2B and 2C, the inner box 3b includes a tire 40 to facilitate a carrying operation of the inner box 3b. Further, the inner box 3b may not have the tire 40.

As illustrated in FIGs. 2B and 2C, the inner box 3b includes a handle 41 to facilitate a carrying operation and a lifting operation of the inner box 3b. Further, the inner box 3b may not have the handle 41.

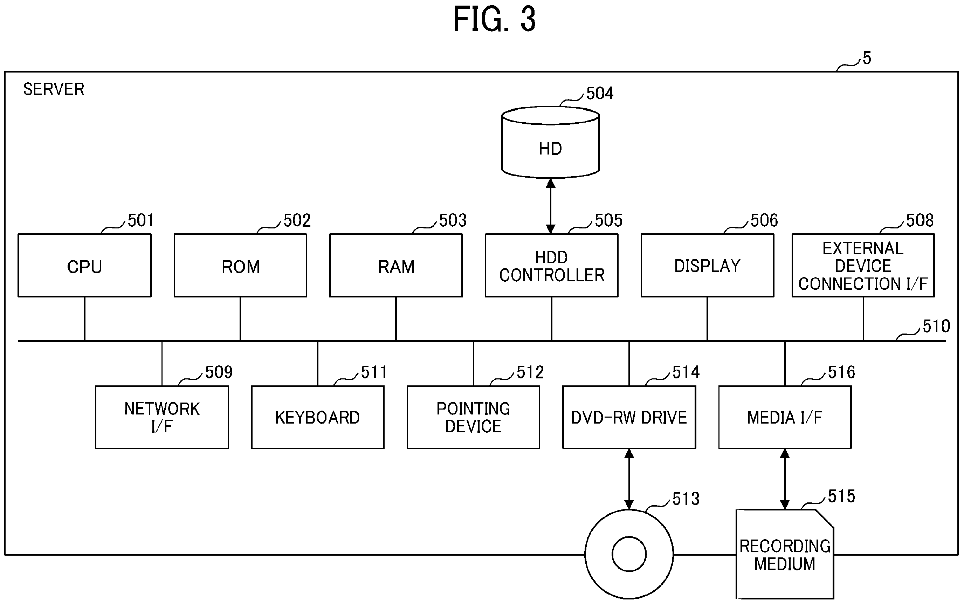

Hereinafter, with reference to FIG. 3, a description is given of hardware configuration of the server 5.

FIG. 3 is an example of configuration of hardware block diagram of the server 5.

As illustrated in FIG. 3, the server 5 constructed by a computer, includes, for example, central processing unit (CPU) 501, read only memory (ROM) 502, random access memory (RAM) 503, hard disk (HD) 504, hard disk drive (HDD) controller 505, display 506, external device connection interface (I/F) 508, network interface (I/F) 509, data bus 510, keyboard 511, pointing device 512, digital versatile disk rewritable (DVD-RW) drive 514, and media interface (I/F) 516.

The CPU 501 controls the operation of the server 5 entirely. The ROM 502 stores programs used for driving the CPU 501, such as initial program loader (IPL). The RAM 503 is used as a work area of the CPU 501. The HD 504 stores various data, such as programs. The HDD controller 505 controls reading and writing of various data with the HD 504 under the control of the CPU 501.

The display 506 displays various information such as cursor, menus, windows, characters, or images. The external device connection I/F 508 is an interface for connecting various external devices. In this case, the external device is, for example, a universal serial bus (USB) memory, a printer, or the like. The network I/F 509 is an interface for performing data communication by utilizing a communication network 100. The data bus 510 is address bus and data bus used for electrically connecting each of the components, such as the CPU 501, illustrated in FIG. 3.

The keyboard 511 is a type of input unit having a plurality of keys used for inputting characters, numerals, various instructions, or the like. The pointing device 512 is a type of input unit used for selecting and executing various instructions, selecting a process target, moving a cursor, or the like.

The DVD-RW drive 514 controls reading and writing of various data with the DVD-RW 513 used as an example of removable recording media. Further, the computer may use digital versatile disk recordable (DVD-R) in addition to or instead of DVD-RW. The media I/F 516 controls reading and writing (storing) of data with a recording medium 515, such as flash memory.

The programs executable by the server 5 according to the above-described embodiment may be recorded on a computer-readable recoding medium, such as compact disk read only memory (CD-ROM), flexible disk (FD), compact disk-recordable (CD-R), and digital versatile disc (DVD) as files in an installable format or executable format.

Further, the programs executable by the server 5 according to the embodiment may be stored in one or more computers connected to a network, such as the Internet, and downloaded via the network. Further, the programs executable by the server 5 according to the embodiment may be provided or distributed over a network, such as the Internet.

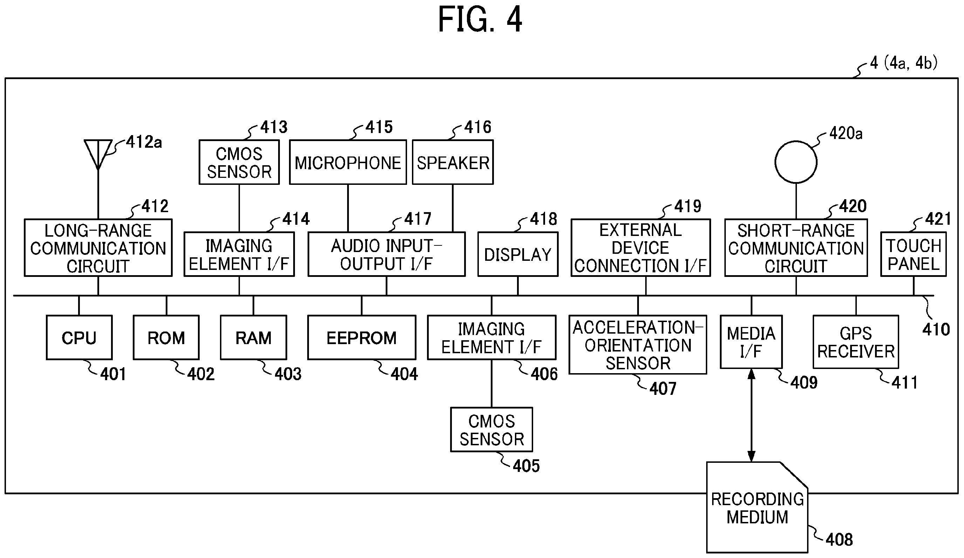

Hereinafter, with reference to FIG. 4, a description is given of hardware configuration of the collector terminal 4a and the client terminal 4b. Hereinafter, the collector terminal 4a and the client terminal 4b are described as a smartphone 4 (see FIG. 4).

FIG. 4 is an example of configuration of hardware block diagram of the smartphone 4. As illustrated in FIG. 4, the smartphone 4 includes, for example, CPU 401, ROM 402, RAM 403, electrically erasable programmable read-only memory (EEPROM) 404, complementary metal oxide semiconductor (CMOS) sensor 405, imaging element interface (I/F) 406, acceleration-orientation sensor 407, media I/F 409, and global positioning system (GPS) receiver 411.

The CPU 401 controls the operation of the smartphone 4 entirely. The ROM 402 stores programs used for driving the CPU 401, such as initial program loader (IPL). The RAM 403 is used as a work area of the CPU 401 of the smartphone 4. The EEPROM 404 reads or writes various data, such as a program for smartphone under the control of the CPU 401.

The CMOS sensor 405 is a type of built-in imaging unit that captures images of objects, such as image of user, and acquires the image data under the control of the CPU 401. Further, the charge coupled device (CCD) sensor may be used an imaging unit for the smartphone 4 instead of the CMOS sensor. The imaging element I/F 406 is a circuit that controls the driving of the CMOS sensor 405.

The acceleration-orientation sensor 407 includes various sensors, such as an electronic magnetic compass to detect the geomagnetism, a gyrocompass, and an acceleration sensor. The media I/F 409 controls reading and writing (storing) of data to a recording medium 408, such as flash memory. The GPS receiver 411 receives GPS signals from GPS satellites.

The smartphone 4 further includes, for example, long-range communication circuit 412, CMOS sensor 413, imaging element I/F 414, microphone 415, speaker 416, audio input-output interface (I/F) 417, display 418, external device connection I/F 419, short-range communication circuit 420, antenna 420a of the short-range communication circuit 420, and touch panel 421.

The long-range communication circuit 412 is a circuit that communicates with other device via the communication network 100. The CMOS sensor 413 is a type of built-in imaging unit for capturing images of objects and acquiring image data of objects under the control of CPU 401. The imaging element I/F 414 is a circuit that controls the driving of the CMOS sensor 413.

The microphone 415 is a type of built-in circuit that converts audio signals into electrical signals. The speaker 416 is a type of built-in circuit that converts electrical signals into physical vibration to generate audio, such as music and voice.

The audio input-output I/F 417 is a circuit that processes input and output of the audio signals with the microphone 415 and the speaker 416 under the control of the CPU 401. The display 418 is a type of display unit, such as liquid crystal and organic electro luminescence (OEL), which displays images of objects and various icons, or the like.

The external device connection I/F 419 is an interface for connecting various external devices. The short-range communication circuit 420 is a communication circuit, such as near field communication (NFC) and Bluetooth (registered trademark). The touch panel 421 is a type of input unit for operating the smartphone 4 by the user by pressing the display 418.

The smartphone 4 further includes, for example, bus line 410. The bus line 410 is address bus and data bus for electrically connecting each of the components, such as the CPU 401 illustrated in FIG. 4.

The smartphone program executable by the smartphone 4 according to the above-described embodiment may be recorded on a computer-readable recoding medium, such as compact disk read only memory (CD-ROM), flexible disk (FD), compact disk-recordable (CD-R), and digital versatile disc (DVD) as files in an installable format or executable format.

Further, the smartphone program executable by the smartphone 4 according to the embodiment may be stored in one or more computers connected to a network, such as the Internet, and downloaded via the network. Further, the smartphone program executable by the smartphone 4 according to the embodiment may be provided or distributed over a network, such as the Internet.

Further, the smartphone program executable by the smartphone 4 according to the embodiment can be provided in advance in ROM or the like disposed in the smartphone 4.

### (Functional Configuration of Server)

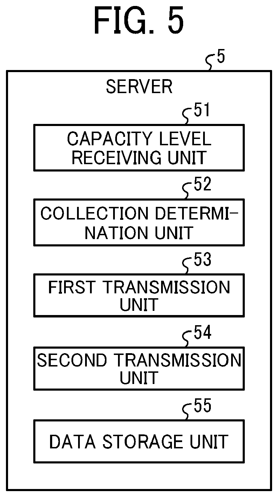

Hereinafter, with reference to FIG. 5, a description is given of a document collection processing of the embodiment, among various operations performed by the CPU 501 of the server 5 by executing the program. The document collection processing may be also referred to as the collection work of document, such as confidential document.

FIG. 5 is an example of configuration of functional block diagram used for document collection processing performed by the CPU 501 of the server 5. As illustrated in FIG. 5, the server 5 includes, for example, capacity level receiving unit 51, collection determination unit 52, first transmission unit 53, second transmission unit 54, and data storage unit 55.

The capacity level receiving unit 51 receives a capacity level of the confidential document, which is the processing target object, stored or accommodated in the collection box 3. The capacity level of the confidential document indicates physical quantity of the confidential document stored or accommodated in the collection box 3.

The collection determination unit 52 determines whether the confidential document, which is the processing target object, is to be collected based on weight data or information (i.e., physical quantity) on the confidential document received by the capacity level receiving unit 51 from the collection box 3. More specifically, the collection determination unit 52 creates and determines a collection plan, such as a collection schedule of the confidential document based on the capacity level of the confidential document notified from the collection box 3 provided at a plurality of locations.

In this description, the location indicates a place where the collection box 3 is located. Therefore, if the collection box 3 is disposed at each building of separate addresses, each building at each address becomes the location. Further, if the collection box 3 is disposed at each floor of the same building, each floor of the same building becomes the location. Further, if the collection box 3 is disposed at each separate place in the same floor, each separate place in the same floor becomes the location.

In this description, the collection schedule means collection date/time and collection route. The collection date/time may be time alone, date alone, and time zone of AM/PM. The collection route is not limited to a route of buildings at different addresses described above, but the collection route may be a route of floors in the same building, and a route of places on the same floor.

Further, the collection schedule may be any one of the collection date/time and the collection route. If the building set as the collection destination is determined in advance, the collection schedule may be time alone or time zone alone. Further, if the collection date is a fixed date, the collection schedule may be the collection route alone if only one collection day is considered.

The collection determination unit 52 predicts the capacity-saturated-time for each collection box 3 based on the current capacity level of box (e.g., amount of accumulated document or remaining available capacity level), past capacity level, transition of past capacity level, date and time information, and operation day information.

The collection determination unit 52 calculates an optimum collection route for a plurality of collection boxes 3 whose capacity level of the confidential document exceeds a given threshold value. For example, the collection determination unit 52 calculates the optimum collection route of a collection vehicle (e.g., truck) based on the current capacity level of box (e.g., amount of accumulated document or remaining available capacity level), position information, map information, and collector information.

The first transmission unit 53 transmits the date and time of the collection schedule of the confidential document, determined by the collection determination unit 52, to the client terminal 4b. For example, the first transmission unit 53 notifies the collection day and collection time to the client terminal 4b by email and/or web system.

The second transmission unit 54 transmits the collection destination and the collection schedule (date and time, collection route) of the confidential document, determined by the collection determination unit 52, to the collector terminal 4a of the collector handling the collection work of confidential document. For example, the second transmission unit 54 transmits the collection plan for each collection vehicle (e.g., truck) operated by the collector, such as collection contractor.

The data storage unit 55 stores at least the capacity level and date information of the confidential document in association with the identification information (ID) 36a of the outer box 3a and the identification information (ID) 36b of the inner box 3b of the collection box 3.

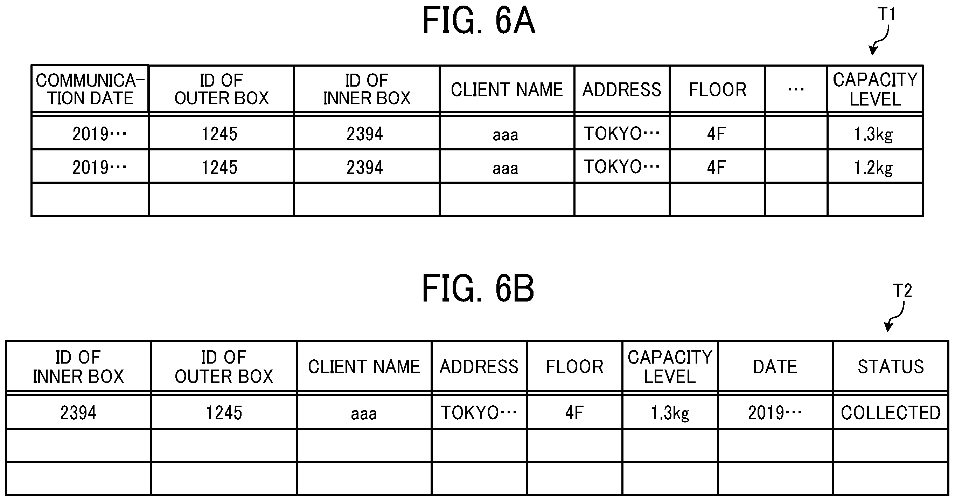

FIGs. 6A and 6B illustrate examples of data table storing various data related to the collection work of confidential document. As illustrated in FIGs. 6A and 6B, the data storage unit 55 configures a data table for storing various data related to the collection work of confidential document in the HD 504.

The data table illustrated in FIG. 6A is an example of collection data table T1, which stores various information, such as communication date and time, identification information (ID) 36a of the outer box 3a, identification information (ID) 36b of the inner box 3b, client information (e.g., name), address, and capacity level in association with each other.

The data table illustrated in FIG. 6B is an example of discard data table T2, which stores various information, such as identification information (ID) 36b of the inner box 3b, identification information (ID) 36a of the outer box 3a, client information (e.g., name), address, discarded date, capacity level, and status in association with each other for each of the identification information (ID) 36b of the inner box 3b.

That is, the collection determination unit 52 determines the collection work of confidential document by referring to the collection data table T1 illustrated in FIG. 6A. Further, the collection determination unit 52 updates the collection data table T1 illustrated in FIG. 6A after performing the collection work of confidential document.

That is, the collection determination unit 52 updates the discard data table T2 illustrated in FIG. 6B after performing the collection work and the discarding work of confidential document.

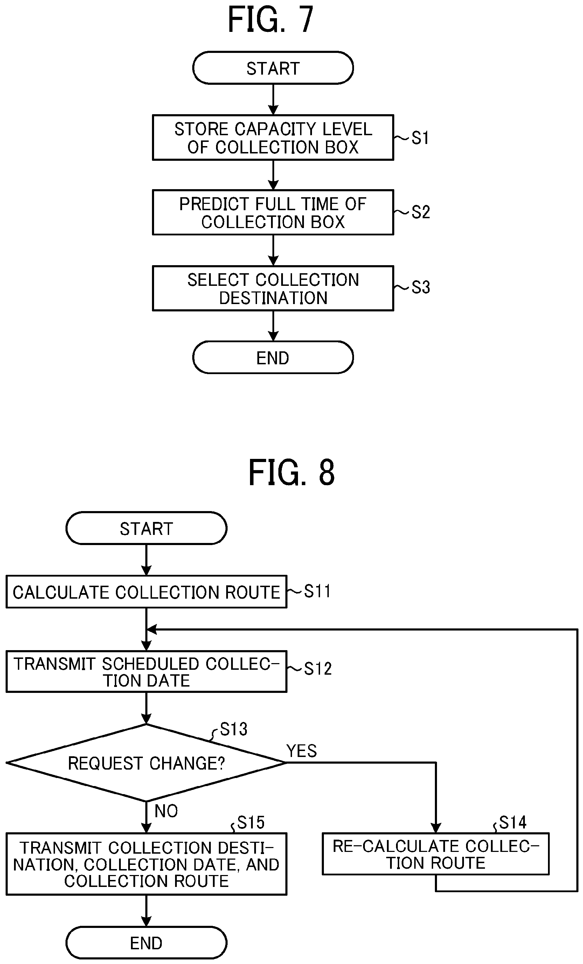

Hereinafter, with reference to FIG. 7, a description is given of the processing performed by the server 5.

### (Capacity Monitoring)

At first, a processing of monitoring capacity level is described with reference to FIG. 7. FIG. 7 is a flowchart illustrating a process of monitoring capacity level at the server 5.

As illustrated in FIG. 7, the data storage unit 55 of the server 5 stores the capacity level of each collection box 3, which is reported or notified from each collection box 3 with a given time interval, in the collection data table T1 (step S1).

Further, if the data is not transmitted from the collection box 3 due to abnormality at the collection box 3, or no response is transmitted from the collection box 3 even if the server 5 transmits a communication request, the data storage unit 55 determines that an error occurs on communication with the collection box 3.

The data storage unit 55 of the server 5 notifies an organization that manages the system operation in a case of communication error. The error detection may or may not be performed depending on situations.

Then, the collection determination unit 52 of the server 5 predicts the capacity-saturated-time of each collection box 3 based on the current capacity level, past capacity level, transition of past capacity level, date and time information, and operation day information stored in the collection data table T1 illustrated in FIG. 6A (step S2). The prediction of capacity-saturated-time of the collection box 3 can be performed, for example, using the regression analysis setting the operation time period as a parameter X and the capacity level as a parameter Y.

Then, the collection determination unit 52 of the server 5 selects one or more of the collection boxes 3 whose capacity level exceed a given threshold level, as the collection destination (step S3).

### (Processing of Selecting Collection Route)

Hereinafter, with reference to FIG. 8, a description is given of processing of selecting a collection route. FIG. 8 is a flowchart illustrating a flow of processing of selecting a collection route at the server 5.

As illustrated in FIG. 8, the collection determination unit 52 of the server 5 calculates the optimum collection route that can set the shortest collection time required for collecting the collection box 3 whose capacity level exceeding the given threshold level for each collection vehicle, such as truck (step S11). The optimum collection route may be the shortest collection distance or the lowest collection fee amount.

In this configuration, if the capacity level of one collection box 3 does not yet exceed the given threshold level but is close to the given threshold level and the one collection box 3 is present at one location close to the calculated collection destination, the collection determination unit 52 of the server 5 may add the one collection box 3 to the collection destination. Further, even if the capacity level of one collection box 3 has exceeded the given threshold level, if the required collection time of the one collection box 3 is expected to be longer and the one collection box 3 can be waited for the collection work for a few days later, the collection determination unit 52 of the server 5 excludes the one collection box 3 from the collection destination. That is, based on the detected capacity level of each collection box 3, the collection determination unit 52 of the server 5 determines which confidential document stored or accommodated in which collection box 3 is to be collected or recovered among the collection boxes 3 storing or accommodating the confidential document.

Then, the first transmission unit 53 of the server 5 transmits the scheduled collection date/time to the client terminal 4b before the scheduled collection date (step S12).

Then, the client inputs an acceptance or a change request to the scheduled collection date/time using the client terminal 4b, and answers to the server 5 (step S13)

If the server 5 receives a request for changing the scheduled collection date/time from the client terminal 4b (step S13: YES), the server 5 re-calculates the collection route (step S14).

If the server 5 receives the acceptance of the scheduled collection date/time from the client terminal 4b (step S13: NO), the second transmission unit 54 of the server 5 transmits the collection destination, collection date/time, and collection route to the collector terminal 4a (step S15).

### (Processing from Collection Work to Discarding Work)

Hereinafter, a description is given of processing from the collection work to discarding work performed by a collector.

The collector visits the collection destination based on the collection destination, collection date/time, and collection route, instructed by the server 5. Then, the collector changes or replaces the existing inner box 3b of the collection box 3 at the collection destination with another inner box 3b that is empty.

Then, the collector uses the collector terminal 4a to read the identification information (ID) 36a of the outer box 3a, the identification information (ID) 36b of the inner box 3b (i.e., collection target) of the collection box 3 disposed at the collection destination, and the identification information (ID) 36b of the inner box 3b of empty (i.e., new inner box 3b), and then the collector notifies a replacement of inner box 3b to the server 5, with which the system configured using the server 5 recognizes that the inner box 3b is replaced. Further, the collector also transmits a collection completion signature signed by the client to the server 5 from the collector terminal 4a.

Then, the collector carries the collected inner box 3b into a cargo of a truck having a lock, and locks the cargo of the truck.

Then, the collector drives the truck to deliver the inner box 3b to a discarding plant or facility. The discarding plant shall have a lockable-closed processing space, and shall allow an entry of specific limited persons. The key at discarding plant may be a fingerprint authentication or a general key.

The collector unloads the inner box 3b at the discarding plant or facility from the truck, reads the identification information (ID) 36b of the inner box 3b using the collector terminal 4a, and then notifies the unloading of the inner box 3b to the server 5, with which the server 5 recognizes that the confidential document is unloaded from the truck.

Further, another information terminal may be provided at the discarding plant or facility. The another information terminal can be used to read the identification information (ID) 36b of the inner box 3b and to notify the unloading of the inner box 3b to the server 5.

The collector opens the open-close door 34 of the inner box 3b at the discarding plant or facility, and then destroys the confidential document by injecting or inserting the confidential document into a confidential document processing machine.

The collector reads the identification information (ID) 36b of the inner box 3b using the collector terminal 4a at the discarding plant or facility, and then notifies the destroying of confidential document to the server 5, with which the server 5 recognizes that the confidential document is destroyed and deleted.

Further, another information terminal may be provided at the discarding plant or facility. The another information terminal can be used to read the identification information (ID) 36b of the inner box 3b and to notify the destroying of confidential document to the server 5.

### (Processing of Managing Status)

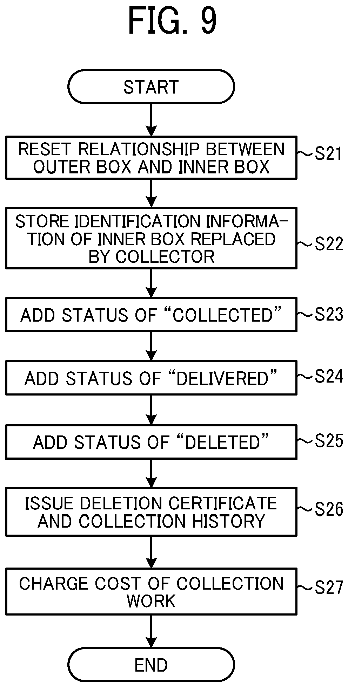

Hereinafter, with reference to FIGs. 9, 10, and 11, a description is given of processing of managing status after performing the collection work.

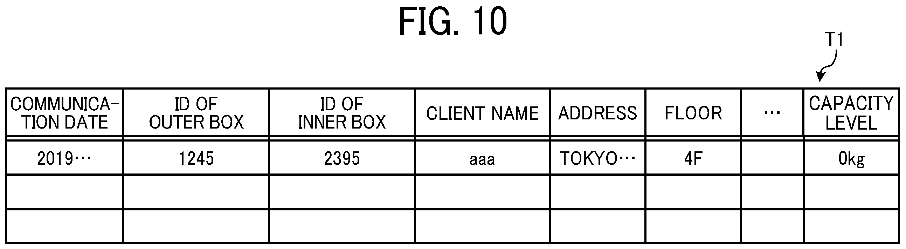

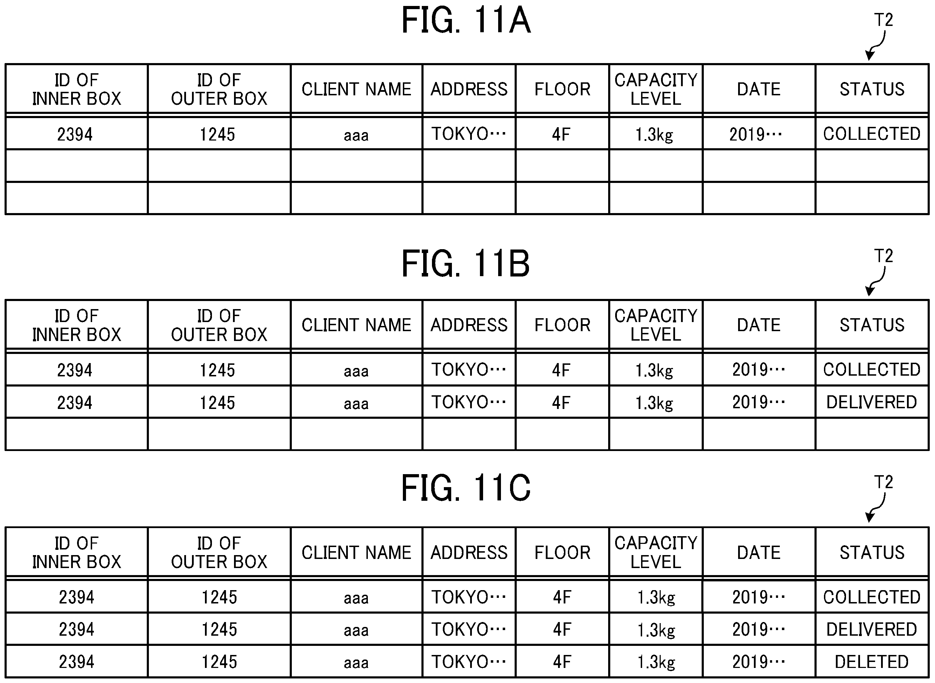

FIG. 9 is a flowchart illustrating a processing of managing status at the server 5. FIG. 10 is an example of the collection data table T1 after performing the collection work. FIGs. 11A, 11B, and 11C are examples of the discard data table T2 after performing the collection work or after performing the discarding work.

As illustrated in FIG. 9, based on the information exchanged between the collector terminal 4a and the server 5 using the identification information (ID) 36b of the inner box 3b received from the collector terminal 4a during the collection work, the collection determination unit 52 of the server 5 resets a relationship between the outer box 3a and the inner box 3b for each collection box 3 (step S21). For example, as to the collection data table T1 illustrated in FIG. 10, the identification information (ID) 36b of the inner box 3b is changed, and the capacity level is also changed to "0 kg."

Then, the collection determination unit 52 of the server 5 stores the identification information (ID) 36b of the inner box 3b replaced by the collector (step S22).

Then, the collection determination unit 52 of the server 5 sets the status of the inner box 3b collected by the collector as "collected" and adds the status of "collected" based on the collection completion signature signed by the client, received from the collector terminal 4a (step S23). For example, as illustrated in FIG. 11A, the discard data table T2 stores data associated with the identification information (ID) 36b of the collected inner box 3b having the status of "collected."

Then, based on information of unloading of the collected inner box 3b at the discarding plant or facility received from the collector terminal 4a, the collection determination unit 52 of the server 5 adds the status of the collected inner box 3b as "delivered" at the discarding plant or facility (step S24). For example, as illustrated in FIG. 11B, the discard data table T2 stores data associated with the identification information (ID) 36b of the collected inner box 3b having the status of "delivered."

Then, based on information of destroying the confidential information at the discarding plant or facility received from the collector terminal 4a, the collection determination unit 52 of the server 5 adds the status of the collected inner box 3b as "deleted" (step S25). For example, as illustrated in FIG. 11C, the discard data table T2 stores data associated with the identification information (ID) 36b of the collected inner box 3b having the status of "deleted."

Then, the collection determination unit 52 of the server 5 issues a deletion certificate and collection history of the confidential information, and notifies the deletion certificate and the collection history of the confidential information to the client terminal 4b (step S26).

Then, based on the capacity level of the inner box 3b stored in the discard data table T2, the collection determination unit 52 of the server 5 calculates the cost of collection work, and charges the client the cost of collection work based on the weight of the inner box 3b and the subscribed contract (step S27). The cost of collection work may be calculated based on the re-measurement at the discarding plant or facility.

Further, the client can download and print the collection history and the deletion certificate from the server 5 using the client terminal 4b.

As to the above described embodiment, the processing target object can be collected efficiently and simple manner.

Further, the collection box 3 employs the double structure, with which the security can be set higher, and the confidential document can be collected without shredding the confidential document, and thereby sheets, such as paper, can be used for recycling, such as material recycling.

Further, even if the capacity level detected by the sensor 37 is not at the completely full level, the collection box 3 can transmit information on the capacity level to the server 5 at a given timing, and then the server 5 can predict the capacity-saturated-time of the collection box 3 and the optimum collection schedule (date and time, route), and thereby the collection efficiency can be improved compared to conventional collection systems.

As to the above described embodiment, the management apparatus of managing a collection work of processing target object is devised. The management apparatus includes the capacity level receiving unit 51 configured to receive information on physical quantity of the particular processing target object accumulated in each of a plurality of collection boxes 3 provided respectively at a plurality of locations, and the collection determination unit 52 configured to determine a collection plan of the particular processing target object accumulated in each of the plurality of collection boxes 3 based on the information on the physical quantity of the particular processing target object accumulated in each of the plurality of collection boxes 3 detected by the sensor 37 used as the capacity level detection unit.

As to the management apparatus, the collection determination unit 52 determines a collection schedule of the particular processing target object based on the information on the physical quantity of the particular processing target object notified from the each of the plurality of collection boxes 3 provided respectively at the plurality of locations.

As to the management apparatus, the collection determination unit 52 calculates an optimum collection route for each of the plurality of the collection boxes 3 whose physical quantity of the particular processing target object exceeds a given threshold value.

The management apparatus further includes the first transmission unit 53 configured to transmit the collection schedule of the particular processing target object, determined by the collection determination unit 52, to a plurality of information terminals disposed at the plurality of locations.

The management apparatus further includes the second transmission unit 54 configured to transmit the collection schedule of the particular processing target object, determined by the collection determination unit 52, to the information terminal 4a (i.e., collector terminal 4a) used by a collector handling a collection work of the particular processing target object.

The management apparatus further includes the data storage unit 55 configured to store at least the information on the physical quantity of the particular processing target object and date and time information in association with identification information of the collection box 3, and the collection determination unit 52 determines the collection of the particular processing target object by referring to the data storage unit 55.

As to the management apparatus, the collection determination unit 52 predicts a capacity-saturated-time of the collection box 3 based on current physical quantity, past physical quantity physical quantities, transition of past physical quantity, and operation day information.

As to the management apparatus, the collection determination unit 52 updates information stored in the data storage unit 55 after collecting the particular processing target object.

As to the above described embodiment, processing target object can be collected efficiently using simple processing.

Each function of the embodiments described above may be implemented by one or more processing circuits. Each of the functions of the above-described embodiments can be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

The apparatuses and devices described in the embodiment merely indicates one example of multiple computing environment that can implement the embodiment of this disclosure. In one embodiment, the server 5 may include a plurality of computing devices as a server cluster. The plurality of computing devices are configured to communicate with each other via any type of communication link, including a network or shared memory, and perform the processing disclosed in this description.

### (Second Embodiment)

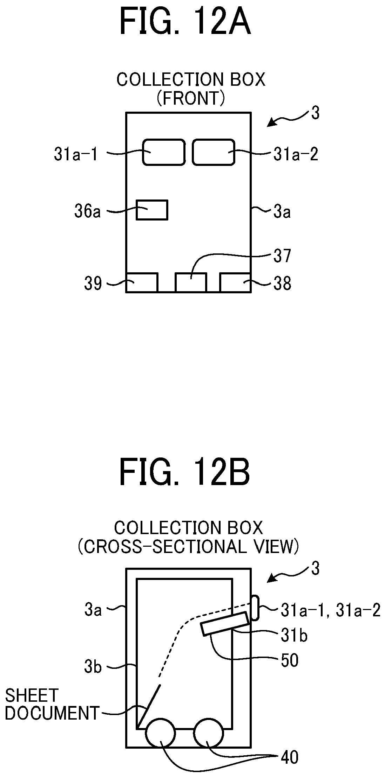

Hereinafter, with reference to FIGs. 12A and 12B, a description is given of a second embodiment.

In the second embodiment, the inner box 3b includes a guide member, such as a guide plate (e.g., slide plate) that guides documents, such as confidential documents (e.g., sheet documents) inserted through the inlet port 31b to securely store or accommodate the confidential documents (e.g., sheet documents), which is different from the first embodiment. In the description of the second embodiment of this disclosure, the description of the same portion as that of the first embodiment is omitted, and the part different from the first embodiment will be described.

FIG. 12 illustrates an example of configuration of the collection box 3 according to the second embodiment. FIG. 12A illustrates a front appearance of the collection box 3, which is a front appearance of the outer box 3a. FIG. 12B illustrates a cross sectional view of the collection box 3.

As illustrated in FIG. 12A, the outer box 3a of the collection box 3 of the second embodiment includes two inlet ports 31a-1 and 31a-2 arranged on the right side and the left side, as the inlet port 31a collectively. The two inlet ports 31a-1 and 31a-2 are respectively arranged on the right side and the left side relative to the partition plate 32 provided at the center of inside the inner box 3b. For example, each of the two inlet ports 31a-1 and 31a-2 has a given width that allows the insertion of given sheets, such as A4 sheet along the longitudinal direction of A4 sheet.

When the confidential documents (e.g., sheet documents) of A4 sheet are inserted into each of the two inlet ports 31a-1 and 31a-2 arranged at the right side and the left side, the confidential documents (e.g., sheet documents) of A4 sheet can be separated into two rows, corresponding to the two inlet ports 31a-1 and 31a-2 where the confidential documents (e.g., sheet documents) of A4 sheet are inserted into, by the partition plate 32 of the inner box 3b.

Further, as illustrated in FIG. 12B, the outer box 3a of the collection box 3 of the second embodiment is provided with a guide plate 50 (e.g., slide plate) for each of the two inlet ports 31a-1 and 31a-2. The guide plate 50 passes and extends through the inlet port 31b of the inner box 3b. The guide plate 50 functions as the guide member. Specifically, the guide plate 50 (e.g., slide plate) guides the confidential documents (e.g., sheet documents) inserted from each of the two inlet ports 31a-1 and 31a-2 into the inner box 3b to securely accommodate the confidential documents (e.g., sheet documents) inside the inner box 3b.

As illustrated in FIG. 12B, a length (depth length) of the guide plate 50 is set to a given length so that the inserted confidential documents (e.g., sheet documents) do not drop directly onto the inner bottom face of the inner box 3b when the inserted confidential documents (e.g., sheet documents) fall inside the inner box 3b.

More specifically, the length (depth length) of the guide plate 50 is preferably set to a given particular length to direct the inserted confidential documents (e.g., sheet documents) to hit a corner of the inner bottom face of the inner box 3b when the inserted confidential documents (e.g., sheet documents) fall inside the inner box 3b.

With this configuration, the inserted confidential documents (e.g., sheet documents) do not drop directly onto the inner bottom face of the inner box 3b, with which a situation that the inserted confidential documents (e.g., sheet documents) are randomly stacked inside the inner box 3b can be prevented.

Further, the length (depth length) of the guide plate 50 is set depending on a size of the collection box 3 (inner box 3b). Therefore, a size of the guide plate 50 is set to a give size capable of adjusting the length (depth length) of the guide plate 50 with respect to an internal space of the collection box 3 (inner box 3b) used for accommodating sheets having a given sheet size, such as A4.

Further, the guide plate 50 can be provided with a variable adjustment mechanism, which can variably adjust the length (depth length) and an angle of the guide plate 50 based on the total amount (e.g., weight) of confidential documents (e.g., sheet documents) inserted in the inner box 3b, to change a drop position of the confidential documents (e.g., sheet documents) inserted in the inner box 3b.

Further, the inner bottom face of the inner box 3b may be configured to be a face movable upward and downward directions to change the drop position of the confidential documents (e.g., sheet documents) inserted in the inner box 3b.

Further, in the second embodiment, the guide plate 50 (e.g., slide plate) is provided to each of the two inlet ports 31a-1 and 31a-2, but is not limited thereto. For example, the guide plate 50 (e.g., slide plate) can be provided for the inlet port 31a described in the first embodiment of this disclosure.

Further, in the second embodiment, the guide plate 50 (e.g., slide plate) is provided for each of the two inlet ports 31a-1 and 31a-2, but is not limited thereto. For example, the guide plate 50 (e.g., slide plate) can be provided to the inlet port 31b of the inner box 3b.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside the apparatus as long as the HDD is accessible. In this example, the CPU, such as a cashe memory of the CPU, and the RAM may function as a physical memory or a primary memory of the apparatus, while the HDD may function as a secondary memory of the apparatus.

Numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

## Claims

1. A system (1) for collecting processing target object, the system (1) comprising:
a plurality of collection apparatuses (3), provided respectively at a plurality of locations, each configured to accumulate the processing target object in each of the plurality of collection apparatuses (3);
a capacity level detection unit (37), provided for each of the plurality of collection apparatuses (3), configured to detect physical quantity of the processing target object accumulated in each of the plurality of collection apparatuses (3); and
a collection determination unit (52) configured to determine a collection plan of the processing target object accumulated in each of the plurality of collection apparatuses (3) based on information on the physical quantity of the processing target object accumulated in each of the plurality of collection apparatuses (3) detected by the capacity level detection unit (37).

2. The system (1) according to claim 1,
wherein the collection determination unit (52) determines a collection schedule of the processing target object based on the information on the physical quantity of the processing target object, notified from the each of the plurality of collection apparatuses (3) provided at each of the plurality of locations.

3. The system (1) according to claim 2,
wherein the collection determination unit (52) calculates an optimum collection route for each of the plurality of the collection apparatuses (3) whose physical quantity of the processing target object exceeds a given threshold value.

4. The system (1) according to claim 2 or claim 3, further comprising a first transmission unit (53) configured to transmit the collection schedule of the processing target object, determined by the collection determination unit (52), to a plurality of information terminals (4b) respectively disposed at the plurality of locations.

5. The system (1) according to any one of claims 2 to 4, further comprising a second transmission unit (54) configured to transmit the collection schedule of the processing target object, determined by the collection determination unit (52), to an information terminal (4a) used by a collector handling a collection work of the processing target object.

6. The system (1) according to any one of claims 1 to 5, further comprising:
a data storage unit (55) configured to store at least the physical quantity of the processing target object and date and time information in association with identification information of the collection apparatus (3), and
wherein the collection determination unit (52) determines the collection plan of the processing target object by referring to the data storage unit (55).

7. The system (1) according to any one of claims 1 to 6,
wherein the collection determination unit (52) predicts a capacity-saturated-time of the collection apparatus (3) based on current physical quantity of the processing target object, past physical quantity of the processing target object, transition of past physical quantity of the processing target object, and operation day information.

8. The system (1) according to any one of claims 1 to 7,
wherein the collection determination unit (52) determines that an communication error occurs when the collection determination unit (52) does not receive the information on the physical quantity of the processing target object.

9. The system (1) according to claim 6,
wherein the collection determination unit (52) updates information stored in the data storage unit (55) after collecting the processing target object.

10. The system (1) according to any one of claims 1 to 9,
wherein the collection determination unit (52) calculates collection cost based on the information on the physical quantity of the processing target object.

11. The system (1) according to any one of claims 1 to 10,
wherein the collection apparatus (3) employs a double structure of an outer case (3a) of box shape and an inner case (3b) of box shape included inside the outer case (3a).

12. The system (1) according to claim 11,
wherein the collection apparatus (3) includes a guide member (50) configured to guide the processing target object, inserted from an inlet port (31a) provided for the outer case (3a), to the inner case (3b).

13. A management apparatus (5) for managing a collection work of processing target object comprising:
a capacity level receiving unit (51) configured to receive information on physical quantity of the processing target object accumulated in each of a plurality of collection apparatuses (3) provided respectively at a plurality of locations; and
a collection determination unit (52) configured to determine a collection plan of the processing target object accumulated in each of the plurality of collection apparatuses (3) based on the information on the physical quantity of the processing target object accumulated in each of the plurality of collection apparatuses (3) detected by the capacity level detection unit (37).

14. The management apparatus (5) of managing a collection work of processing target object according to claim 13,
wherein the collection determination unit (52) determines a collection schedule of the processing target object based on the information on the physical quantity of the processing target object notified from the each of the plurality of collection apparatuses (3) provided respectively at the plurality of locations.

15. A method for managing a collection work of processing target object comprising:
detecting physical quantity of the processing target object accumulated in each of a plurality of collection apparatuses (3) provided respectively at a plurality of locations; and
determining a collection plan of the processing target object accumulated in each of the plurality of collection apparatuses (3) based on information on the detected physical quantity of the processing target object accumulated in each of the plurality of collection apparatuses (3).
